# DEMANDE DE BREVET EUROPEEN

(11) **EP 0 864 739 A1**
(43) Date de publication de la demande: **16.09.1998**
(21) Numéro de dépôt: 98400580.1
(22) Date de dépôt: 12.03.1998
(51) Int. Cl.: F02K 1/70

(54) **Inverseur de poussée de turboréacteur à portes à structure externe autoraidie**

(30) Priorité: 13.03.1997 FR 9702983
(71) Demandeur: Hispano-Suiza Aerostructures, 75015 Paris (FR)
(72) Inventeur: Gonidec, Patrick, 76290 Montivilliers (FR); Rouyer, Pascal Gérard, 76420 Saint Aubin Routot (FR); Vauchel, Guy Bernard, 76610 Le Havre (FR)

(57) **Abrégé**

Un inverseur de poussée de turboréacteur à double flux comporte des portes pivotantes (7) intégrées en jet direct dans la paroi extérieure du conduit (15) de flux de soufflante et constituant des obstacles de déviation de flux en procurant une inversion de poussée. La porte (7) est constituée d'un panneau (23) formant structure externe et d'une structure interne (22) reliées par une zone de liaison structurale locale (25), le reste des structures externe (23) et interne (22) étant indépendantes.

Le verrou (27) de maintien de la porte (7) en position fermée est installé dans ladite zone structurale (25).

## Description

La présente invention concerne un dispositif d'inversion de poussée de turboréacteur à double flux. Le turboréacteur est équipé d'un conduit en arrière de la soufflante dont le but est de canaliser le flux secondaire dit froid, ce conduit est constitué d'une paroi interne qui entoure la structure du moteur proprement dite en arrière de la soufflante, et d'une paroi externe dont la partie amont vient en continuité du carter moteur qui entoure la soufflante. Cette paroi externe peut canaliser à la fois le flux secondaire et le flux primaire dans sa partie aval, et ceci en arrière de l'éjection du flux primaire, dit chaud, dans le cas de nacelle à flux mélangés ou à flux confluents par exemple, mais dans d'autres cas, la paroi externe ne canalise que le flux secondaire, dans le cas de nacelles dites à flux séparés.

Une paroi peut également caréner l'extérieur du moteur, c'est à dire l'extérieur du carter qui entoure la soufflante et l'extérieur de la paroi extérieure du conduit décrit ci-dessus, ceci dans le but de minimiser la traînée de l'ensemble propulsif. Ceci est notamment le cas pour des ensembles propulsifs rapportés sur l'extérieur d'aéronef, particulièrement lorsque ces ensembles propulsifs sont attachés sous les ailes ou à l'arrière du fuselage.

Nous appellerons capotage extérieur l'ensemble constitué par la paroi extérieure de la nacelle.

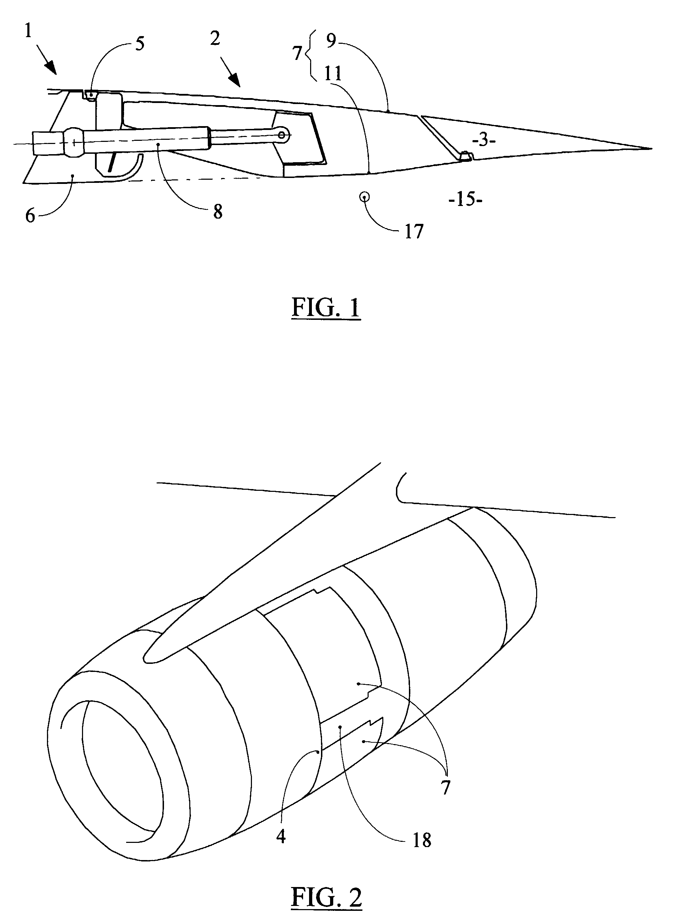

La figure 1 des dessins joints montre un exemple connu de réalisation d'un inverseur de poussée de ce type, appliqué comme le montre la vue schématique en perspective de la figure 2, à un turboréacteur à double flux.

Le dispositif d'inversion est constitué de portes 7 formant une partie mobile 2 et constituant en position inactive, lors d'un fonctionnement en jet direct, une partie du capotage extérieur, et d'une structure fixe réalisant ce capotage extérieur, en amont des portes, par une partie amont 1 puis en aval des portes, par une partie aval 3 et entre les portes 7 par l'intermédiaire de poutres 18 qui relient la partie aval 3 du capotage extérieur à la partie amont 4 du capotage extérieur. Les portes 7 sont montées sur une circonférence du capotage extérieur et sont montées pivotantes dans une zone intermédiaire de leurs parois latérales sur les poutres 18 situées de part et d'autre de ces portes, ces parois latérales constituant avec les parois amont et aval, les parois qui relient la partie extérieure 9 des portes 7, qui constituent une partie de la paroi extérieure de la nacelle, à la partie intérieure 11 des portes 7, qui constituent une partie de la paroi extérieure du conduit.

La partie amont 1 de structure fixe comporte un cadre avant 6 qui sert de support aux moyens de commande des déplacements des portes 7, constitués par exemple par des vérins 8.

En position activée, les portes 7 basculent de telle façon que la partie des portes situées en aval des pivots 17, vient obstruer plus ou moins totalement le conduit 15, et de telle façon que la partie amont des portes vient dégager un passage dans le capotage extérieur de manière à permettre au flux secondaire d'être canalisé radialement par rapport à l'axe du conduit. La partie amont des portes 7 fait saillie à l'extérieur du capotage extérieur pour des raisons de dimensionnement du passage qui doit être capable de laisser passer ce flux sans compromettre le fonctionnement du moteur. L'angle de pivotement des portes est ajusté de manière à permettre le passage du flux et de manière à supprimer la poussée de ce flux, voire à commencer à générer une contre poussée en générant une composante du flux dévié vers l'amont.

Des exemples connus de réalisation sont illustrés par exemple par FR 1 482 538, par FR-A-2 030 034 ou par US 3.605.411.

Enfin la commande des portes d'une position à une autre par vérin est connue en soi, nous noterons cependant la soluticn très simple où il y a un vérin par porte fixé dans sa partie amont à la structure fixe amont du capotage extérieur, et dans sa partie aval à la porte en un point situé dans la partie amont comme décrit par exemple par FR 1 482 538.

Dans le type d'inverseur décrit ci-dessus, les portes sont toujours réalisées monobloc c'est à dire que la structure externe est liée structuralement à la structure interne. L'étanchéité est réalisée sur les parois latérales de liaison de ces deux structures.

Le problème généralement rencontré est dû aux chargements aérodynamiques dans la majorité des cas de vol. La pression du flux circulant dans le canal annulaire 15 est presque toujours supérieure à la pression ambiante à l'extérieur de la nacelle. Ceci a pour conséquence, suivant la technologie de fabrication des portes retenue, de générer des efforts sur la structure même des portes impliquant des déformations géométriques.

Ces déformations créent des écarts dans les lignes et des marches, entre la structure fixe et l'externe porte, néfastes pour les performances aérodynamiques recherchées.

Un des buts de l'invention est d'éviter ces inconvénients des solutions connues antérieures et, au contraire, de minimiser voire de supprimer les déformées de la structure externe de la porte d'inverseur quand la structure interne subit une déformée due à la pression du flux circulant dans le canal annulaire.

Ces buts sont atteints conformément à l'invention grâce à un inverseur de poussée de turboréacteur caractérisé en ce que la porte est constituée d'une structure externe formée d'un panneau et d'une structure interne reliées par une zone de liaison structurale locale, le reste de ladite structure externe étant indépendante de la structure interne, un verrou de maintien de la porte en position fermée étant installé dans ladite zone structurale et les joints d'étanchéité de bord de porte étant solidarisés à la structure interne.

Ces dispositions permettent de minimiser voire de supprimer les déformées de la structure externe de la porte quand la structure interne subit une déformée due à la pression du flux circulant dans le canal annulaire.

D'autres caractéristiques et avantages de l'invention seront mieux compris à la lecture de la description qui va suivre des modes de réalisation de l'invention en référence aux dessins annexés sur lesquels :
- la figure 1 représente une demi-vue schématique, en coupe longitudinale par un plan passant par l'axe de rotation d'un turboréacteur associé, d'un inverseur de poussée à portes pivotantes, en position fermées, d'un type connu et qui a fait précédemment l'objet d'une description ;
- la figure 2 représente une vue schématique en perspective d'une nacelle comportant un inverseur de poussée du type précité montré en position monté et avec les portes fermées ;
- la figure 3 représente dans une vue analogue à la figure 1, l'inverseur de poussée en position jet direct d'un mode de l'invention ;
- la figure 4 représente le principe défini dans la figure 3 en vue de face selon la section IV IV ;
- la figure 5 représente selon une vue analogue aux figures 1 et 3 un autre mode de l'invention en position jet direct ;
- la figure 6 représente selon une vue analogue aux figures 1, 3 et 5, un autre mode de l'invention en position jet direct ;
- la figure 7 représente le mode de l'invention défini dans la figure 6 en vue de face selon la section VII VII ;
- la figure 8 représente une vue partielle d'un mode d'assemblage suivant un détail agrandi A de la figure 7 ;
- la figure 9 représente selon une vue analogue aux figures 4 et 6 un autre mode de l'invention en position jet direct.

La présente invention s'applique à tout ensemble mobile d'une nacelle, articulé ou non, susceptible de recevoir une pression sur une de ses faces plus importante que sur une autre et impliquant une déformation structurale de l'ensemble.

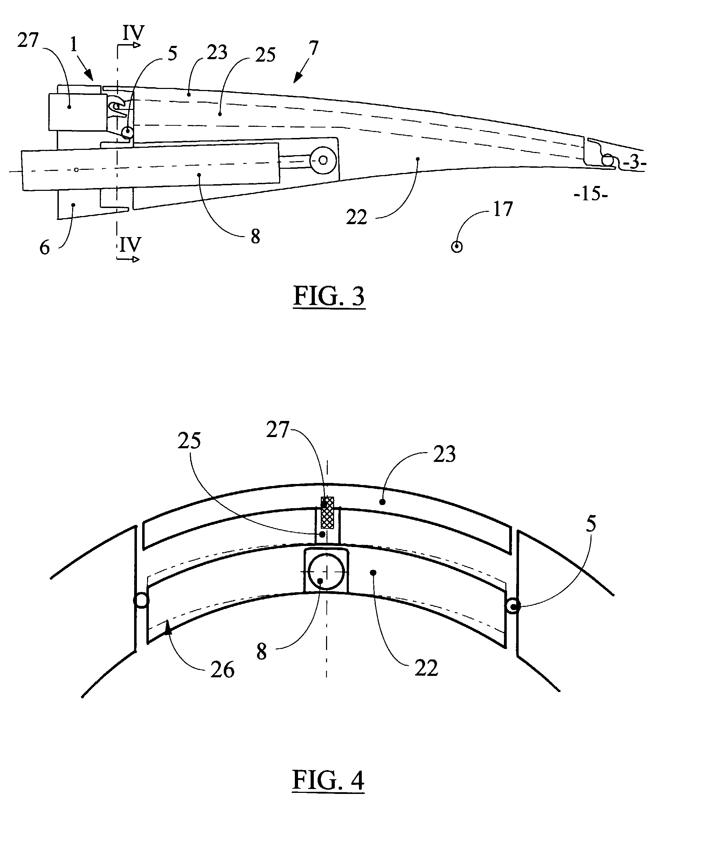

Les figures 3 et 4 montrent un mode de réalisation de l'invention appliquée à une porte 7 d'inverseur de poussée. La structure interne 22 de la porte 7 supporte l'étanchéité 5. Cette disposition a pour objet d'isoler le panneau externe 23 de tout effort résultant, généré par le flux circulant dans le canal annulaire 15, sur la structure interne 22.

Le panneau externe 23 a une structure générale auto raidie et est relié à la structure interne 22 par une zone de liaison structurale locale 25 entre lesdites structures. Le verrou 27 de maintien en position fermée de la porte 7 est installé à l'emplacement de la zone 25. Cette zone 25 est de ce fait exempte de déformée de ligne en position jet direct, grâce au maintien de celle-ci sur la structure fixe 1 par le verrou 27. Le reste de la structure externe 23 étant indépendante de la structure interne 22, ladite structure externe est elle aussi exempte de déformée de ligne par rapport à la structure fixe 1 de l'inverseur.

Cette zone 25 peut être dans l'axe de la porte 7 comme représenté sur les figures mais aussi être décalée d'un côté ou de l'autre de l'axe de la porte suivant la nécessité.

La structure externe 23 peut réaliser toute la surface externe de la porte 7 ou une partie de la surface en amont, la partie en aval étant dans ce cas liée à la structure interne 22. La surface extérieure de la structure 23 forme une partie de la surface aérodynamique de la nacelle.

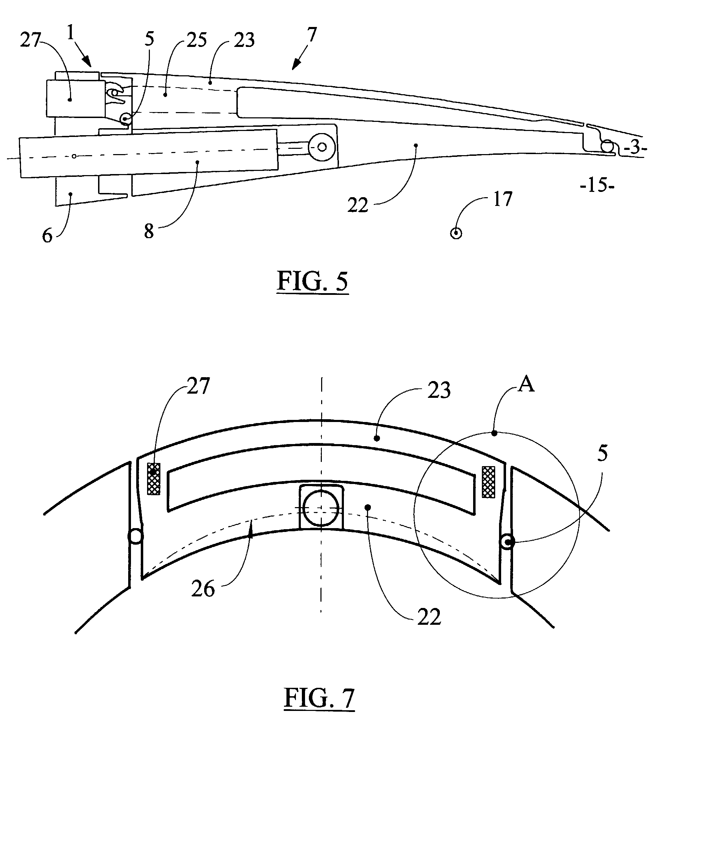

La figure 5 montre que la zone structurale de liaison 25 peut ne concerner que la partie amont de la structure de la porte 7.

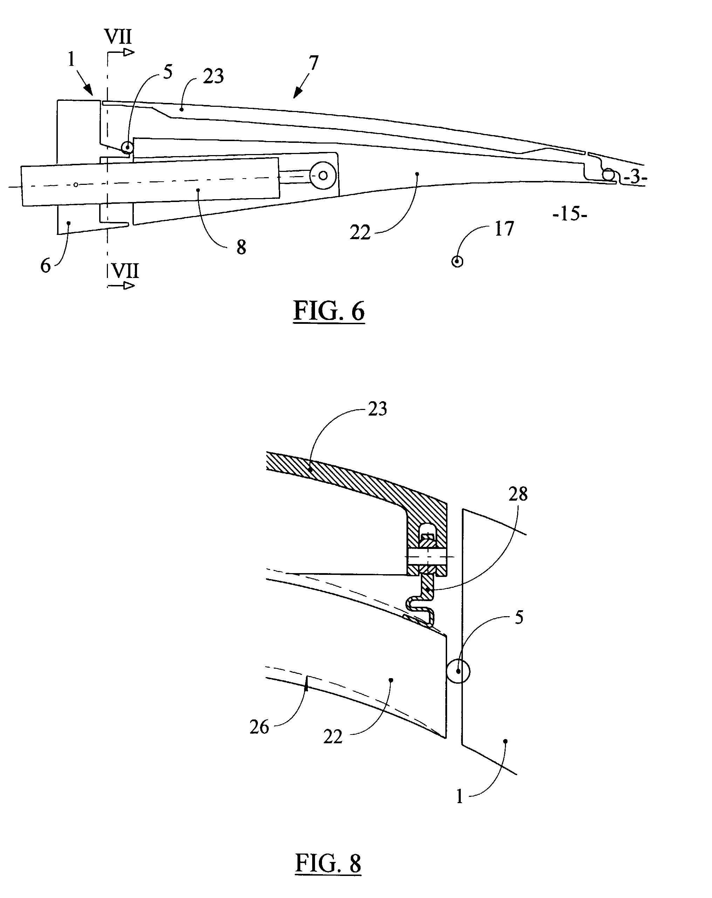

Un second mode de réalisation de l'invention est défini sur les figures 6 à 8. Il propose, pour une utilisation de pluralité de verrous, une architecture adaptée pour une déformée 26 de la structure interne 22 de la porte 7 due à la pression du flux circulant dans le canal annulaire 15.
Dans ce cas, l'application de deux structures rigides 25 entre les deux éléments de porte dans la zone des verrous 27 engendrerait une déformation 26 équivalente, sur la structure externe 23, à la structure interne 22.
La réponse à ce problème réside en une liaison formée d'un élément de jonction 28 rendant indépendant les déformées de la structure interne 22 sur la structure externe 23. Cette liaison 28 peut être réalisée par système rotulant et/ou élastique ou tout autre principe connu de l'homme de métier. Le verrou peut être associé aussi bien à la structure interne 22 qu'à la structure externe 23, selon la nécessité de gestion des déformées. De même cette liaison 28 peut intéresser toute la longueur ou une partie de la porte 7.

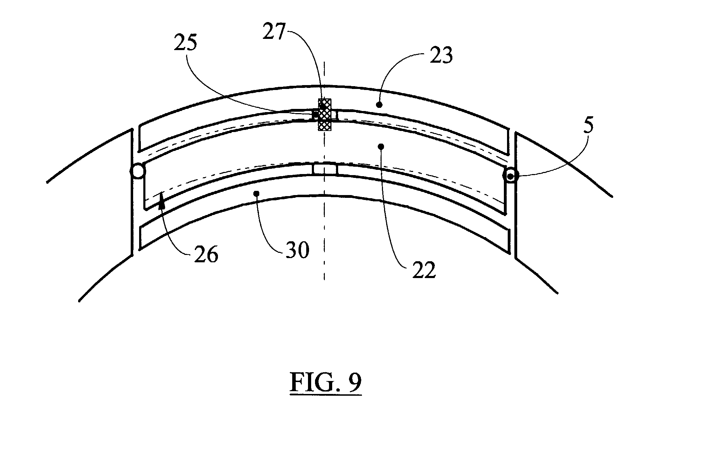

La figure 9 représente le mode de l'invention défini en figures 3 à 5 appliqué au panneau interne de porte 30. Dans ce cas, la structure rigide 22 supporte le joint 5. Cette structure interne structurale 22 subit donc les déformées structurales dues à la pression circulant dans le canal annulaire 15. Dans ce concept, toutes les technologies déjà définies pour la liaison de la structure externe 23 sur la structure interne 22 définies sur les figures 3 à 5 sont entièrement transposables.

Cette application évite la déformation de la surface interne de la porte 7 par rapport aux lignes externes du canal annulaire 15.

Il est à noter que l'utilisation de l'invention sur la partie interne 30 de la porte 7 peut se faire en association avec la structure externe 23 ou être utilisée seule.

L'emploi d'un concept ou d'un autre peut, selon les performances recherchées, être appliqué indifféremment sur une ou plusieurs portes 7 d'un même inverseur.

## Revendications

1. Inverseur de poussée de turboréacteur à double flux comportant des portes pivotantes (7) susceptibles en position fermée, lors d'un fonctionnement en jet direct, de s'intégrer dans la paroi extérieure du conduit (15) de flux en arrière de la soufflante de turboréacteur, et susceptibles en outre chacune de pivoter sous l'action d'un moyen (8) de commande des déplacements de manière à constituer des obstacles de déviation de flux lors d'un fonctionnement en inversion de poussée caractérisé en ce que la porte (7) est constituée d'une structure externe formée d'un panneau (23) et d'une structure interne (22) reliées par une zone de liaison structurale locale (25), le reste de ladite structure externe (23) étant indépendante de la structure interne (22), un verrou (27) de maintien de la porte (7) en position fermée étant installé dans ladite zone structurale (25) et les joints d'étanchéité (5) de bord de porte (7) étant solidarisés à la structure interne (22).

2. Inverseur de poussée de turboréacteur selon la revendication 1 caractérisé en ce que ladite zone structurale (25) est disposée dans l'axe longitudinal de la porte (7).

3. Inverseur de poussée de turboréacteur selon la revendication 1 caractérisé en ce que ladite zone structurale (25) est disposée en position décalée par rapport à l'axe longitudinal de la porte (7).

4. inverseur de poussée de turboréacteur selon l'une quelconque des revendications 1 à 3 caractérisé en ce que la liaison entre le panneau externe (23) et la structure interne (22) par la zone de liaison structurale locale (25) est réalisée sur toute la longueur de la porte (7).

5. Inverseur de poussée de turboréacteur selon l'une quelconque des revendications 1 à 3 caractérisé en ce que la liaison entre le panneau externe (23) et la structure interne (22) par la zone de liaison structurale locale (25) est réalisée sur une partie de la longueur de la porte (7).

6. Inverseur de poussée de turboréacteur selon la revendication 1 caractérisé en ce que ladite zone structurale (25) comporte deux liaisons séparées, associées chacune à un verrou et comprenant chacune un élément de jonction (28)

7. Inverseur de poussée de turboréacteur selon la revendication 6 caractérisé en ce que ledit élément de jonction (28) est rotulant.

8. Inverseur de poussée de turboréacteur selon la revendication 6 caractérisé en ce que ledit élément de jonction (28) est élastique.

9. Inverseur de poussée de turboréacteur selon la revendication 1 caractérisé en ce que ladite structure interne (22) supporte un panneau interne (30) de porte dont la surface radialement interne en jet direct reste dans les lignes aérodynamiques de la paroi du conduit (15) de flux.
